(19) Europäisches Patentamt
European Patent Office
Office européen des brevets

(11) **EP 2 962 132 B1**

(12) **EUROPEAN PATENT SPECIFICATION**

(45) Date of publication and mention
of the grant of the patent:
**03.04.2024 Bulletin 2024/14**

(21) Application number: **13709023.9**

(22) Date of filing: **28.02.2013**

(51) International Patent Classification (IPC):
***G01V 1/38*** *(2006.01)*

(52) Cooperative Patent Classification (CPC):
**G01V 1/3861**

(86) International application number:
**PCT/US2013/028141**

(87) International publication number:
**WO 2014/133509 (04.09.2014 Gazette 2014/36)**

(54) **SYSTEM AND METHOD FOR PREVENTING CAVITATION IN CONTROLLED FREQUENCY MARINE SEISMIC SOURCE ARRAYS**

SYSTEM UND VERFAHREN ZUR VERHINDERUNG VON KAVITATION BEI MEERESSEISMISCHEN QUELLENARRAYS MIT GESTEUERTER FREQUENZ

SYSTÈME ET PROCÉDÉ PERMETTANT D'EMPÊCHER LA CAVITATION DANS DES ENSEMBLES DE SOURCE SISMIQUE MARINE À FRÉQUENCE CONTRÔLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(73) Proprietor: **BP Corporation North America Inc.**
**Houston, TX 77079 (US)**

(72) Inventors:
• **HARPER, Mark**
**Naperville, IL 60563 (US)**
• **DELLINGER, Joseph, Anthony**
**Naperville, IL 60563 (US)**

(74) Representative: **Hamer, Christopher K. et al**
**Mathys & Squire**
**The Shard**
**32 London Bridge Street**
**London SE1 9SG (GB)**

(56) References cited:
**WO-A2-2010/082126    WO-A2-2012/004587**
**US-A1- 2004 136 266    US-A1- 2011 017 543**
**US-A1- 2012 147 699    US-B1- 7 257 049**

• **Lasse Amundsen ET AL: "GEO Expro Marine Seismic Sources Part I", Geo ExPro, vol. 7, no. 1-2010 28 February 2010 (2010-02-28), pages 32-34, XP055099080, London Retrieved from the Internet: URL:http://www.geoexpro.com/article/Marine_Seismic_Sources_Part_I/5db4dd34.aspx [retrieved on 2014-01-29]**

**Description**

This invention relates to the general subject of seismic exploration and, in particular, to methods for acquiring seismic and other signals that are representative of the subsurface for purposes of seismic exploration and/or surveillance.

Background

A seismic survey represents an attempt to image or map the subsurface of the earth by sending sound energy down into the ground and recording the "echoes" that return from the rock layers below. The source of the down-going sound energy might come, for example, from explosions or seismic vibrators on land, or air guns in marine environments. During a seismic survey, the energy source is placed at various locations near the surface of the earth above a geologic structure of interest. Each time the source is activated, it generates a seismic signal that travels downward through the earth. "Echoes" of that signal are then recorded at a great many locations on the surface. Multiple source / recording combinations are then combined to create a near continuous profile of the subsurface that can extend for many miles. In a two-dimensional (2-D) seismic survey, the recording locations are generally laid out along a single line, whereas in a three dimensional (3-D) survey the recording locations are distributed across the surface in a grid pattern. In simplest terms, a 2-D seismic line can be thought of as giving a cross sectional picture (vertical slice) of the earth layers as they exist directly beneath the recording locations. A 3-D survey produces a data "cube" or volume that is, at least conceptually, a 3-D picture of the subsurface that lies beneath the survey area. In reality, though, both 2-D and 3-D surveys interrogate some volume of earth lying beneath the area covered by the survey. Finally, a 4-D (or time-lapse) survey is one that is recorded over the same area at two or more different times. Obviously, if successive images of the subsurface are compared, any changes that are observed (assuming differences in the source signature, receivers, recorders, ambient noise conditions, etc., are accounted for) will be attributable to changes in the subsurface.

A seismic survey is composed of a very large number of individual seismic recordings or traces. The digital samples in seismic data traces are usually acquired at 0.002 second (2 millisecond or "ms") intervals, although 4 millisecond and 1 millisecond sampling intervals are also common. Typical trace lengths are 5 - 16 seconds, which corresponds to 2500 - 8000 samples at a 2-millisecond interval. Conventionally each trace records one seismic source activation, so there is one trace for each live source-receiver combination. In a typical 2-D survey, there will usually be several tens of thousands of traces, whereas in a 3-D survey the number of individual traces may run into the multiple millions of traces. Chapter 1, pages 9 - 89, of *Seismic Data Processing* by Ozdogan Yilmaz, Society of Exploration Geophysicists, 1987, contains general information relating to conventional 2-D processing. General background information pertaining to 3-D data acquisition and processing may be found in Chapter 6, pages 384-427, of Yilmaz.

Controlled-frequency seismic sources are sources that are adjustable to produce a variety of different source signatures. This includes swept-frequency sources which emit a sinusoidal signal whose amplitude and frequency can be independently controlled. Examples of such include seismic land and marine vibrators. Swept-frequency sources may be preferable to conventional impulsive seismic sources for some geophysical applications, for example to minimize disturbance to nearby facilities by minimizing the peak emitted sound pressure from the sources. The ability to finely control the source frequency spectrum is also useful, as it allows the source to be optimized to meet the particular imaging challenge at hand. Conventionally, swept-frequency marine seismic sources are deployed at a depth such that the lowest non-zero-frequency spectral notch introduced by the surface ghost reflection does not occur within the frequency band of interest. For example, a source with a top frequency of 100Hz would not be deployed deeper than about 7.5m.

Although controlled-frequency seismic sources are quite useful in certain contexts, they are not without their challenges. For example, in order that a controlled- frequency source array should match an airgun array in output energy, the acoustic pressure at the faces of the individual sources is likely to be very high, well in excess of one bar. If deployed at too shallow a depth in the water (e.g. 7.5m) cavitation can occur at the sources during the collection of a marine survey. The term "cavitation" refers to the formation of cavities (bubbles of vacuum or low-pressure vapor) in a fluid and the subsequent collapse thereof. The collapse generates a shock wave by implosion and the pressure wave(s) that result will be sensed and recorded by the hydrophones that are intended to collect the seismic survey data. The resulting pressure wave distorts or contaminates the recorded seismic signal making it more difficult to obtain a clear image of the subsurface.

Cavitation during a marine seismic survey alters the acoustic output of the array, rendering it less controllable; creates broadband noise which is environmentally undesirable; and can damage the sources themselves. One technique that has been used to minimize cavitation is to apportion the frequency band of interest among multiple sources, with each source in the array towed at an optimal depth for its frequency range. Even so, cavitation is still often present for the higher-frequency source elements in the array, which must be towed at the shallowest depths. US 2011/017543 discloses a method for selecting parameters of a seismic source array that will minimize angular variation of the far field spectrum. The method does not comprise using frequency bands at a larger frequency than a first notch. US 7,257,049 discloses a method of marine seismic surveying comprising emitting seismic energy at different depths during a sweep The method does not comprise using distinct and non-overlapping frequency bands at each different depth,

US 2012/147699 discloses a method for acquiring seismic data using multiple restricted-bandwidth seismic sources that, when combined, produce data that have a useful frequency content comparable to that of a broadband seismic survey.

Heretofore, as is well known in the seismic acquisition and processing arts, there has been a need for a system and method that provides a method of reducing the likelihood of or preventing cavitation in controllable frequency marine seismic source arrays that does not suffer from known disadvantages. Accordingly, it should now be recognized, as was recognized by the present inventors, that there exists, and has existed for some time, a very real need for a method of seismic data processing that would address and solve the above-described problems.

The description of the invention which follows, together with the accompanying drawings, should not be construed as limiting the invention to the examples (or preferred embodiments) shown and described. This is so because those skilled in the art to which the invention pertains will be able to devise other forms of this invention which is defined within the scope of the appended claims.

SUMMARY

According to a preferred aspect of the instant invention, there is provided a system and method for acquiring seismic data using a controlled frequency seismic source / array, according to Claim 1.

More particularly, it is customary to deploy a marine seismic source at a depth shallow enough for the surface ghost notch to fall at a frequency greater than or equal to the maximum radiated frequency of interest. See, for example, Laws et al., 2007, "Method of seismic surveying, a marine vibrator arrangement, and a method of calculating the depths of seismic sources", US Patent 7,257,049. If the marine seismic source has a ratio of signal bandwidth to maximum frequency that is less than one half then it is possible to deploy it at a greater depth, so that ghost notches fall below and above its frequency band but not in it. This can be advantageous when deploying controlled-frequency sources and in particular swept-frequency sources because it reduces the risk of cavitation.

With an appropriate choice of limited-bandwidth sources, the depths can be arranged so that they are approximately equal, which has advantages for towing. By placing two or more sources at different depths for the same frequency, any undesired nulls in the radiation pattern caused by the deeper tow can be filled in.

The foregoing has outlined in broad terms the more important features of the invention disclosed herein so that the detailed description that follows may be more clearly understood, and so that the contribution of the instant inventors to the art may be better appreciated. The instant invention is not to be limited in its application to the details of the construction and to the arrangements of the components set forth in the following description or illustrated in the drawings. Rather, the invention is capable of other embodiments and of being practiced and carried out in various other ways as defined in the appended claims. Finally, it should be understood that the phraseology and terminology employed herein are for the purpose of description and should not be regarded as limiting, unless the specification specifically so limits the invention.

DRAWINGS

Other objects and advantages of the invention will become apparent upon reading the following detailed description and upon reference to the drawings in which:

Figure **1** illustrates the general processing environment of the instant invention.

Figure **2** contains a processing sequence suitable for use with data obtained by the instant invention.

Figure **3** illustrates how ghost bands 1 through 6 are disposed as functions of source depth and frequency. The central line of each ghost band indicates combinations of frequency and depth for which downgoing energy from the source maximally benefits from constructive summation with the source's ghost reflecting off the sea surface. The broader ghost bands about the central lines indicate a range of frequencies and depths over which downgoing energy from a source is not excessively attenuated by summation with its ghost.

Figure **4** contains an illustration of one possible configuration of an array of swept-frequency sources.

Figures **5A-5D** contain 2D radiation patterns for different ghost bands.

Figure **6** contains an illustration of a possible array of swept-frequency sources with paired sources at differing depths, to increase the wide-offset performance of the array.

Figures **7** contains illustrations of radiation patterns at six points across the ghost band for a single source.

Figures **8** contains illustrations of radiation patterns at six points across the ghost band for a pair of sources.

Figure **9** illustrates source configurations suitable for use with the instant invention.

DETAILED DESCRIPTION

While this invention is susceptible of embodiment in many different forms, there is shown in the drawings, and will herein be described hereinafter in detail, some specific embodiments of the instant invention. It should be understood, however, that the present disclosure is to be considered an exemplification of the principles of the invention and is not intended to limit the invention to the specific embodiments or algorithms so described.

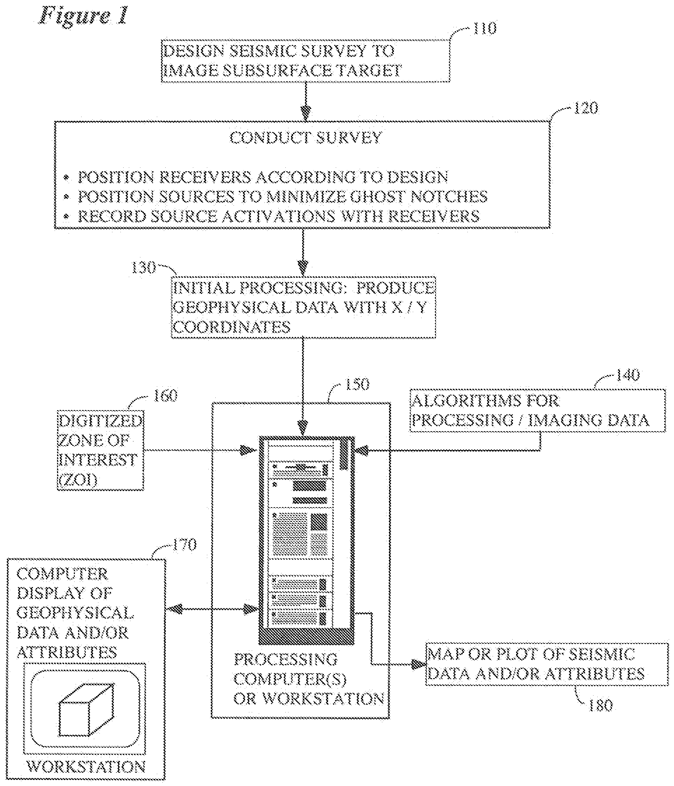

Figure **1** illustrates a general environment in which the instant invention would typically be used. A seismic survey is designed **110** by the explorationist to cover a subsurface region of economic interest. Field acquisition parameters (e.g., shot and receiver spacing and positioning, line spacing, fold, etc.) are typically selected in conjunction with this step, although it is common to modify the ideal design parameters slightly (or substantially) in the field to accommodate the realities of conducting the survey.

Seismic data (i.e., seismic traces) are collected in the field **120** over a subsurface target of potential economic importance and are typically sent thereafter to a processing center **150** where the traces will be subjected to various algorithms to make them more suitable for use in exploration. In some cases, there may be some amount of initial data processing performed while the data are still in the field and this is becoming more common and feasible given the computing power that is available to field crews. The instant invention would typically be implemented as part of the data acquisition step **120**, although at least a tentative scheme for positioning the seismic sources will likely be determined during the design phase **110**.

In the processing center a variety of preparatory processes **130** are typically applied to the seismic traces to make them ready for use by the explorationist. The processed traces would then be made available for use by the instant invention and might be stored, by way of example only, on hard disk, magnetic tape, magneto-optical disk, DVD disk, or other mass storage means.

The at least a portion of the instant invention would best be implemented in the form of a computer program **140** that has been loaded onto a programmable computer in processing center **150** where it is accessible by a seismic interpreter or processor. Note that a processing center **150** suitable for use with the instant invention would typically include mainframes, servers, workstations, or super computers, or more generally, a computer or network of computers that provide for parallel and massively parallel computations, wherein the computational load is distributed between two or more processors. As is also illustrated in Figure **1**, in a preferred arrangement some sort of digitized zone of interest model **160** may be specified by the user and provided as input to the processing computer program. In the case of a 3-D seismic section, the zone of interest model **160** would typically include specifics as to the lateral extent and thickness (which might be variable and could be measured in time, depth, frequency, etc.) of a subsurface target. The exact means by which such zones are created, picked, digitized, stored, and later read during program execution is such that those skilled in the art will recognize that this might be done any number of ways.

A program **140** that might be useful in implementing some portion of the instant invention (e.g., a modeling program) can be conveyed into the computer that is to execute it by means of, for example, a floppy disk, a magnetic disk, a magnetic tape, a magneto-optical disk, an optical disk, a CD-ROM, a DVD disk, a RAM card, flash RAM, a RAM card, a PROM chip, or loaded over a network. In a typical seismic processing environment, the post processing aspects of the instant invention can be made part of a larger package of software modules that is designed to read the raw seismic data and output processed seismic traces. After acquisition by the instant methods, the resulting traces can then typically be sorted into gathers, stacked, and displayed either at a high resolution color computer monitor **170** or in hard-copy form as a printed seismic section or a map **180**. The seismic interpreter can then use the displayed images to assist him or her in identifying subsurface features conducive to the generation, migration, or accumulation of hydrocarbons.

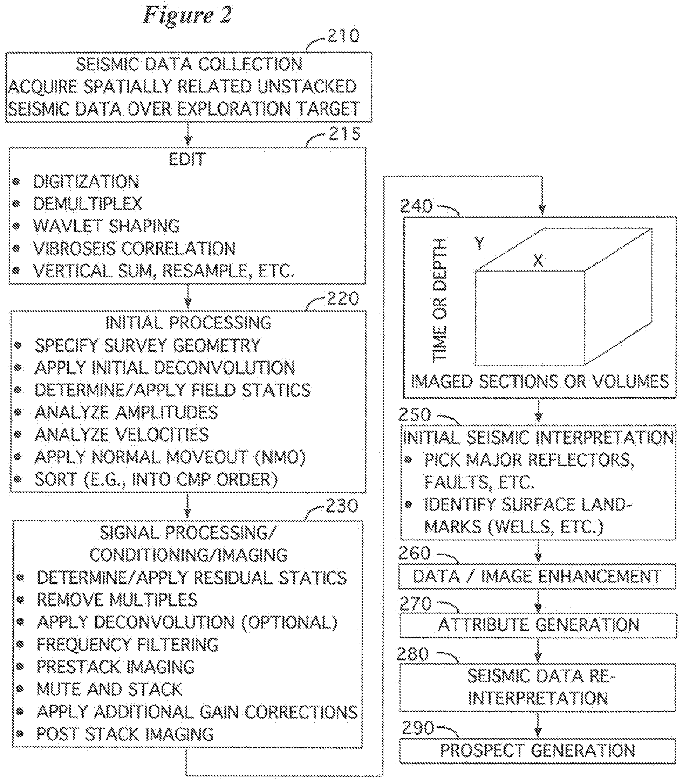

As was indicated previously, some aspects of the instant invention will preferably be made a part of and incorporated into a conventional seismic processing sequence of the sort generally described in Figure **2**. Those of ordinary skill in the art will recognize that the processing steps illustrated in this figure are only broadly representative of the sorts of processes that might be applied to such data and the choice and order of the processing steps, and the particular algorithms involved, may vary markedly depending on the individual seismic processor, the signal source (dynamite, vibrator, etc.), the survey location (land, sea, etc.) of the data, the company that processes the data, etc.

As a first step, and as is generally illustrated in Figure **2**, a 2-D or 3-D seismic survey is conducted over a particular volume of the earth's subsurface (step **210**). The data collected in the field consist of unstacked (i.e., unsummed) seismic traces that contain digital information representative of the volume of the earth lying beneath the survey. General methods by which such data are generally obtained and processed into a form suitable for use by seismic processors and interpreters are well known to those of ordinary skill in the art.

The purpose of a seismic survey is to acquire a collection of spatially related seismic traces over a subsurface target of some potential economic importance. Data that are collected by the methods disclosed herein might consist of, for purposes of illustration only, an unstacked 2-D seismic line, an unstacked 2-D seismic line extracted from a 3-D seismic survey or, preferably, an unstacked 3-D portion of a 3-D seismic survey. The invention disclosed herein is most effective when used to acquire to a group of stacked seismic traces that have an underlying spatial relationship with respect to some subsurface geological feature. Again for purposes of illustration only, the discussion that follows will be couched in terms of traces contained within a 3-D survey (stacked or unstacked as the discussion warrants), although any assembled group of spatially related seismic traces can conceivably be used.

In the case of marine seismic, such data are typically acquired via a towed streamer survey. In a conventional arrangement a receiver vessel tows several hydrophone cables behind it (i.e., several "streamers" in the argot of the trade) as it travels over a subsurface area of interest. Each streamer will typically contain several hundred hydrophones which are designed to sense seismic signals that have been reflected from subsurface rock formations and other density contrasts.

At periodic intervals, a seismic source (that might also towed by that same vessel and located directly behind it) is activated. The source energy propagates downward through the water and penetrates into the ocean bottom, where it is ultimately encounters subsurface rock formations that reflect part of the down going energy back up toward the receivers. Recordings are made of the hydrophones that are carried by the streamer for a short period of time after the source is activated (e.g. for 10 to 20 seconds) at a sample interval that is typically selected by the operator.

After the seismic data are acquired (step **210**), they are typically taken to a processing center where some initial or preparatory processing steps are applied to them. As is illustrated in Figure **2**, a common early step **215** is designed to edit the input seismic data in preparation for subsequent processing (e.g., demux, gain recovery, wavelet shaping, bad trace removal, etc.). This might be followed by specification of the geometry of the survey (step **220**) and storing of a shot / receiver number and a surface location as part of each seismic trace header. Once the geometry has been specified, it is customary to perform a velocity analysis and apply an NMO (normal move out) correction to correct each trace in time to account for signal arrival time delays caused by offset.

After the initial pre-stack processing is completed, it is customary to condition the seismic signal on the unstacked seismic traces before creating stacked (or summed) data volumes (step **230**). In Figure **2** step **230** contains a typical "Signal Processing / Conditioning / Imaging" processing sequence, but those skilled in the art will recognize that many alternative processes could be used in place of the ones listed in the figure. In any case, the ultimate goal from the standpoint of the explorationist is the production of a stacked seismic volume or, in the case of 2-D data, a stacked seismic line for use in the exploration for hydrocarbons within the subsurface of the earth.

As is further suggested in Figure 2, any digital sample within a stacked seismic volume is uniquely identified by a (X, Y, TIME) triplet, with the X and Y coordinates representing some position on the surface of the earth, and the time coordinate measuring a recorded arrival time within the seismic trace (step **240**). For purposes of specificity, it will be assumed that the X direction corresponds to the "in-line" direction, and the Y measurement corresponds to the "cross-line" direction, as the terms "in-line" and "cross-line" are generally understood in the art. Although time is a preferred and most common vertical axis unit, it is well known to those skilled in the art that it is possible to convert seismic traces from one axis unit (e.g., time) to another (e.g., depth) using standard mathematical conversion techniques.

The explorationist may do an initial interpretation **250** of the resulting stacked volume, wherein he or she locates and identifies the principal reflectors and faults wherever they occur in the data set. This might be followed by additional data enhancement **260** of the stacked or unstacked seismic data and/or attribute generation (step **270**) therefrom. In many cases the explorationist will revisit his or her original interpretation in light of the additional information obtained from the data enhancement and attribute generation steps (step **280**). As a final step, the explorationist will typically use information gleaned from the seismic data together with other sorts of data (magnetic surveys, gravity surveys, LANDSAT data, regional geological studies, well logs, well cores, etc.) to locate subsurface structural or stratigraphic features conducive to the generation, accumulation, or migration of hydrocarbons (i.e., prospect generation **290**).

According to a first embodiment of the instant invention, there is provided a method of marine seismic acquisition that allows a swept-frequency source to be towed deep enough to avoid cavitation, while still avoiding the ghost notch that would conventionally be a problem for deeply towed sources in marine seismic surveys.

By way of explanation, in a marine environment, upgoing waves from the seismic source(s) reflect off of the ocean's surface and are sensed by the submerged receivers. This unwanted reflected arrival is known as a ghost event. The ghost event has a relatively small time delay relative to the downgoing primary source and, rather than appearing as a separate (and separable) event on the seismic record, it overlaps with the primary reflections. The resulting mixed wavelet has notches in the amplitude spectrum at a frequency that depends on the source depth. Of course, if the source depth varies during the survey (as it can when surface waves are present) the notches will tend to change in frequency location over time. Optimum source depth has traditionally been a tradeoff between moving the ghost notch out of the seismic band and avoiding near-surface wave action. Thus, source depth control is important in marine surveys.

The ghost notches cause the spectrum of the sound radiated downwards to be divided into bands separated by equally spaced frequencies at which the power of the downward-radiated sound is zero or greatly attenuated. These notch frequencies are conventionally given by the formula

$$f(n,d) = \frac{n*c}{2*d},$$

where c is the speed of sound in water (typically taken as 1500 m/s), d is the depth of the source, and n is a positive integer or zero. For purposes of the instant disclosure, the frequency band between f(0, d) and f(1, d) will be referred to as the first ghost band, the frequency band between f(1, d) and f(2, d) as the second ghost band, and so forth. So, for example, a source that is positioned 50 meters deep is in the first ghost band from 0 to 15 Hz, the second ghost band from 15 to 30 Hz, and the third ghost band from 30 to 45 Hz.

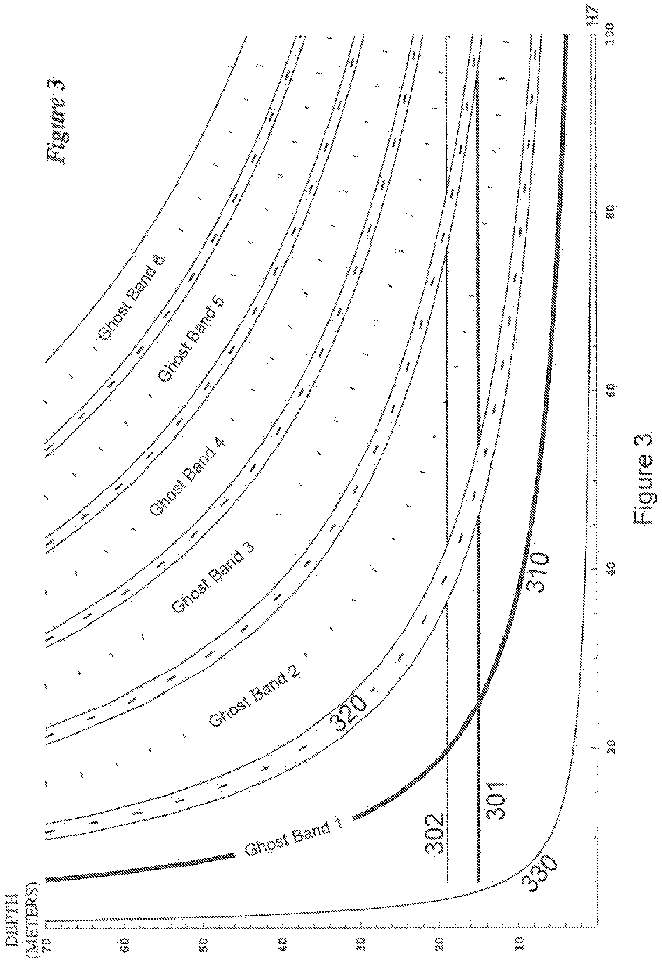

Figure **3** illustrates the ghost bands as functions of depth and frequency. The horizontal lines **301** and **302** represent two conventional broad-band sources at depths of 15 and 19 meters, respectively. The heavy black line "Ghost band 1", **310**, shows the shallowest optimal tow depth as a function of frequency. At this optimal tow depth the direct downgoing wave from the source and the ghost reflection are in phase, and the amplitude of the source signal plus the ghost reflection (the "source amplification factor") reaches its maximum value of 2. This curve marks the center of ghost band 1. For higher frequencies, or deeper depths, a notch is encountered, shown by dotted line 320. A source at that frequency and depth has its downgoing energy nulled out by the ghost reflection because the ghost reflection phase is 180 degrees different from the source. In other words, the source amplification factor is 0. This notch frequency marks the boundary between adjacent ghost bands.

In practice, it is desirable to avoid getting too close to the notch. The finite width of the band around the first notch in Figure 3 shows the limits at which the source amplification factor is less than 0.5. This is the "notch zone" for a minimum acceptable source amplification factor of .5. Note there is also a zeroeth notch at zero depth for all frequencies, or at zero frequency for all depths. The curve 330 shows the minimum frequency and depth at which the source amplification factor is above .5, representing the upper limit of the zeroeth notch zone.

Ideally, a seismic source should be deployed at a depth d such that none of the ghost notch frequencies f(n, d) fall within the frequency range that the source is desired to radiate downwards. So, for example, in Figure 3 if only the shallower broadband source 301 were used, it would have a useful frequency range spanning approximately 5 to 45 Hz. A strategy to avoid this limitation is to have broadband sources at two different depths such that their notch zones do not overlap for any frequency, as shown by broadband sources 301 and 302 in Figure 3. In conjunction with the two sources there must also be some way to separate the signals from them so they can be processed separately and then combined. There are many possible ways to do this. See, for example, Hegna and Parks, 2010, "Method for acquiring and processing marine seismic data to extract and constructively use the up-going and down-going wave-fields emitted by the source(s)", U.S. Patent Application 2010/0008184.

The instant invention achieves this goal in a novel way, by using swept-frequency sources with individual frequency bands that are not identical, e.g., an array where at least one of the sources generates a seismic signal at a relatively high frequency and at least one of the sources generates at a relatively low frequency.

According to an embodiment, the instant invention places higher-frequency sources in higher ghost bands and thus at greater depths in order to avoid cavitation. Any one source may be placed in any ghost band that at least approximately meets two criteria: the band must be wide enough to contain the entire range of frequencies the source is designed or expected to radiate, and the source depth must be great enough to avoid cavitation. The wider the bandwidth of the source, the greater the restriction of possible tow depths imposed by the first criterion.

For purposes of illustration only, the mathematics will be simplified by considering the case of a minimum source amplification of 0. Then referring to Figure 3, a source radiating at 20 Hz lies within the first ghost band from the surface to a depth of 37.5 meters, the second ghost band from 37.5 to 75 meters, and the third ghost band from 75 to 112.5 meters. Similarly, a source that radiates at 30 Hz lies within the first ghost band from the surface to a depth of 25 meters, the second ghost band from 25 meters to 50 meters, and the third ghost band from 50 to 75 meters. Now consider a swept-frequency source that radiates from 20-30 Hz. It must remain within the same ghost band for all frequencies from 20 to 30 Hz in order not to have a notch within its bandwidth. Comparing the depth ranges of the ghost bands for 20 and 30 Hz, we see that this source lies entirely within the first ghost band for tow depths ranging from the surface to a depth of 25 meters, and lies entirely within the second ghost band from 37.5 to 50 meters. A source that radiates from 20-30 Hz only just fits within the third ghost band at a tow depth of 75 meters. For a more realistic minimum source amplification factor of .25 or .5, the third ghost band would not be usable. However, if the bandwidth of the source were reduced, then the third ghost band would expand and become usable.

The narrower the bandwidth, the more ghost bands that may be used. Thus, the difficulty with a single broadband source can be seen: to avoid notches, it must be towed at a depth shallow enough so that its entire frequency range lies within the first ghost band. For some types of sources, this depth may be too shallow to avoid cavitation.

**If** no ghost band meets both criteria (wide enough to contain the frequency range, deep enough to avoid cavitation) for a given source, then in some examples the source will be replaced by two narrower-band sources, and the criteria re-applied to each source. If the array consists of sources of equal bandwidth with non-overlapping bands (except possibly for a taper zone between adjacent frequency bands) then successively higher-frequency sources can be operated in successively higher ghost bands, such that sources may be deployed at equal or nearly equal depths,

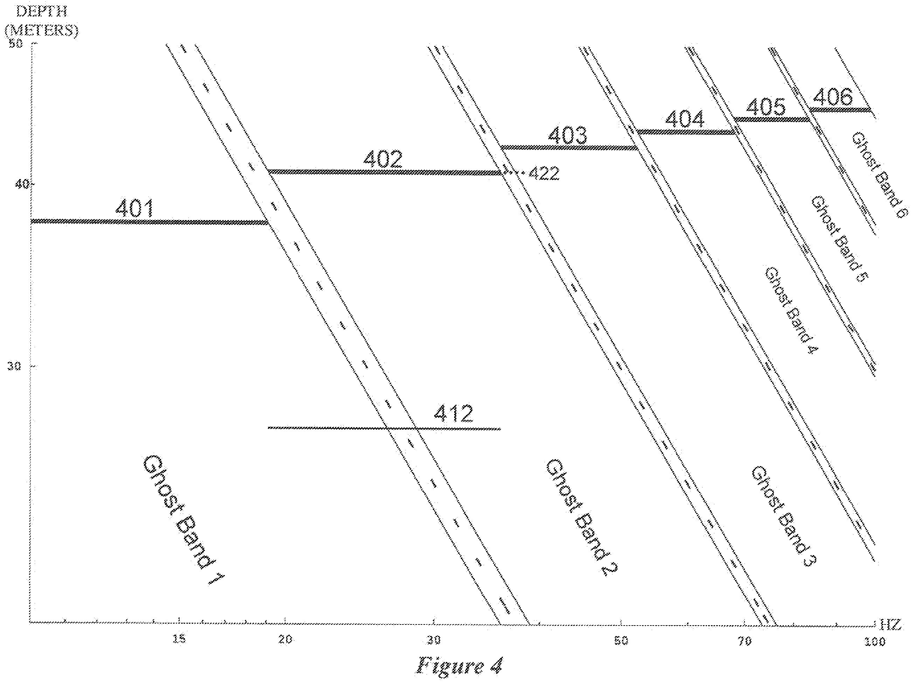

Figure 4 shows a graphical example the embodiments of the present invention. Note the hyperbolas in Figure 3 have become straight lines by plotting frequency and depth on a log- log graph. This representation makes the methodology much easier to visualize. In this example of the embodiments of the present invention the minimum acceptable source amplification factor is 0.25, so the notch zones are somewhat narrower than the example in Figure **3**. Source **401** is towed at a depth of 37.75 meters and spans ghost band 1. This source hands off to source **402** towed at a depth of 40.9 meters in ghost band 2 at 19.3 Hz. Source **402** in turn hands off to source **403** towed at a depth of 42.6 meters in ghost band 3 at 36.4 Hz, and so on up to source **406** in ghost band 6 which extends up to 100 Hz. See Table 1 below for a listing of the frequency ranges and depths of all six sources. This array of sources spans 10 - 100 Hz between them, without gaps. By way of comparison, a conventional broadband source spanning 10-100 Hz would have to be towed at a depth no deeper than 7.5 meters, the depth of the first notch at 100 Hz.

**Table 1**

| Source | Ghost Band | Top Freq (Hz) | Bottom Freq (Hz) | Depth (m) |
|---|---|---|---|---|
| 406 | 6 | 100 | 84.5604 | 45.2968 |
| 405 | 5 | 84.5604 | 68.8725 | 44.5797 |
| 404 | 4 | 68.8725 | 52.8686 | 43.6993 |
| 403 | 3 | 52.8686 | 36.4322 | 42.5523 |
| 402 | 2 | 36.4322 | 19.3289 | 40.8885 |
| 401 | 1 | 19.3289 | 10. | 37.7509 |

The preceding analysis applies to vertically traveling waves, which is a good approximation when sources and receivers are not widely separated, i.e. for so-called "narrow-offset acquisition". For recordings at wider offsets (increasingly the norm) we may also need to consider non-vertical propagation, which introduces some additional complexity in the acquisition design.

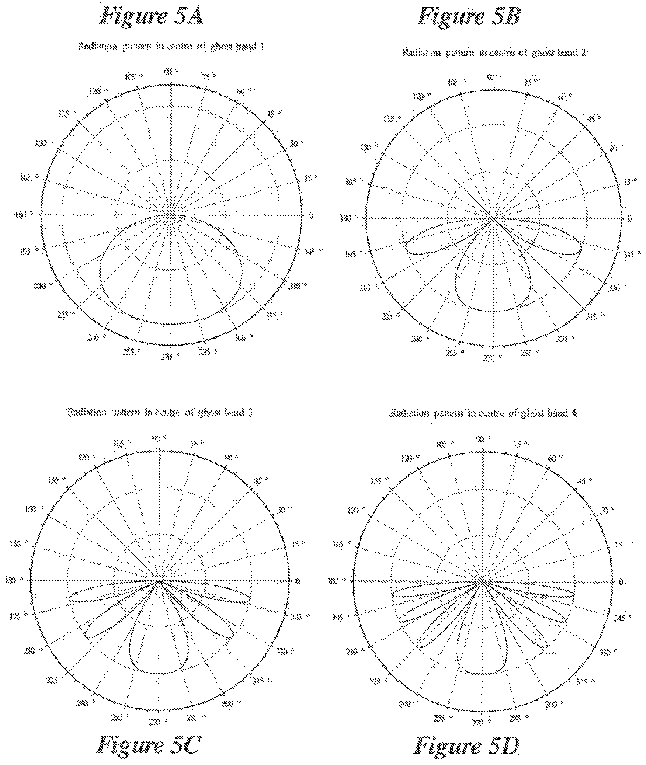

Sources placed conventionally, in the first ghost band, radiate maximal acoustic energy downwards (at 90-degree dip, or zero degrees from the vertical), falling off smoothly with decreasing dip to zero amplitude for energy traveling horizontally (0-degree dip, or 90 degrees from vertical). In contrast, a source placed in the nth ghost band has a more complex radiation pattern, with *n-1* zero-amplitude dip angles (not counting the horizontal) separated by n lobes with large amplitudes. Figure **5** shows radiation patterns for sources at the centers of ghost bands 1 through 4, demonstrating the notches for non-vertical propagation that occur for the deeper ghost bands.

For some applications this more complex radiation pattern may pose no difficulty. For example, higher frequencies attenuate relatively quickly with increasing distance, and so at relatively high frequencies only energy traveling close to vertical may be of interest, in which case notches at wider offsets at those frequencies will not matter. For some algorithms such as Full Waveform Inversion the notches may cause no difficulties, so long as they are properly accounted for in the modeling step of the algorithm. The notches in the radiation pattern are just another property of the source that the inversion accounts for.

**If** the radiation pattern is not acceptable for a given frequency range, one may produce those frequencies from sources at two (or more) different depths, chosen such that at least one source adequately emits each required frequency at each required dip. Note sources at different depths may apportion frequencies among bands the same way, or differently. The simplest solution is simply to acquire data in two (or more) passes, with sources at different depths on each pass.

Alternatively, the sources at different depths may be distinguished from each other during acquisition (either by time, location, source signature, or shot pattern). The required radiation pattern (or patterns) may then be synthesized digitally in the computer as part of the seismic pre-processing, using techniques proposed in, for example, Dellinger and Abma, 2010, "Distance- and frequency-separated swept-frequency seismic sources", WO 2012/078966 A2, which distinguishes sources by frequency and location, or Hegna and Parks, 2010, "Method for acquiring and processing marine seismic data to extract and constructively use the up-going and down-going wave-fields emitted by the source(s)", US 2010008184, which distinguishes sources by initiation time pattern. Swept-frequency sources may also be distinguished by sweep direction and sweep length. Sources with signatures that may be precisely controlled, e.g. underwater loudspeakers, may be distinguished by exciting them with orthogonal pseudorandom sequences.

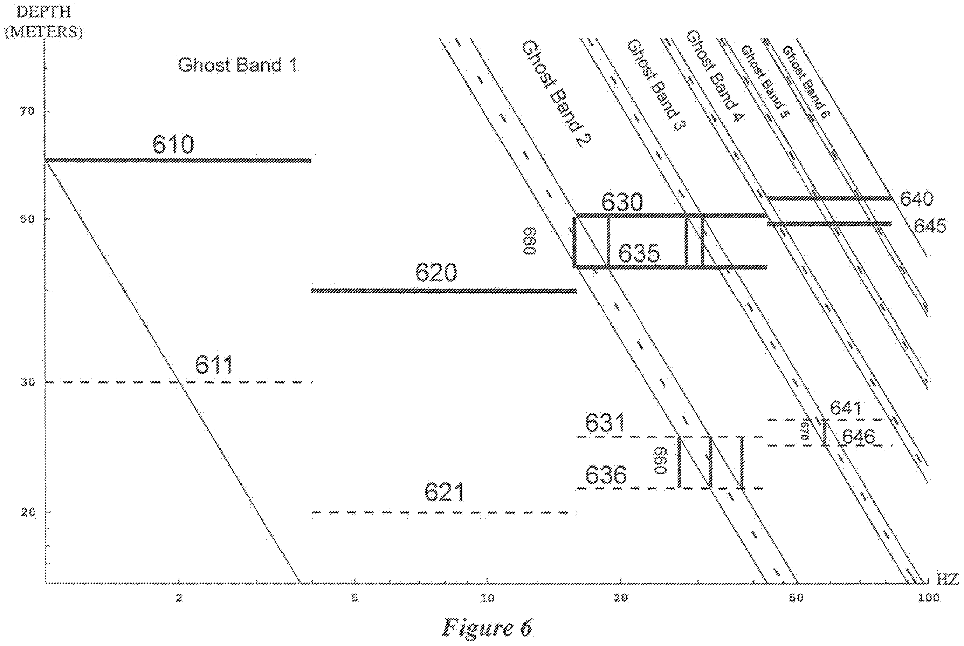

Figure 6 shows an example of an array of six sources spanning 1-80 Hz such that there are no notches for angles from the vertical out to 60 degrees and all sources are towed at depths between 40 and 60 meters, and the minimum source amplification factor for all the frequencies and dip angles within these limits is 0.5. Table 2 enumerates the six sources in this array.

**Table 2**

| Source | Ghost Band | Top Freq (Hz) | Bottom Freq (Hz) | Depth (m) |
|---|---|---|---|---|
| 645 | 4-6 | 83.08 | 43.24 | 49.30 |
| 640 | 4-6 | 83.08 | 43.24 | 53.44 |
| 635 | 2-3 | 43.24 | 16 | 43.10 |
| 630 | 2-3 | 43.24 | 16 | 50.65 |
| 620 | 1 | 16 | 4 | 40 |
| 610 | 1 | 4 | 1 | 60 |

In Figure **6**, sources **610** and **620** are both within the first (conventional) ghost band. Note that splitting the first ghost band between two sources will make it possible to cover a broader frequency range within the first ghost band. The conventional strategy would be to continue on in this way for higher frequencies, with progressively shallower sources tracking the first ghost band to higher frequencies. However, cavitation would then become a problem at higher frequencies for non-impulsive sources. Instead, the choice has been made here to jump to the second ghost band with source 630 at 16Hz, allowing this source to be placed deeper instead of shallower.

Source **630** is paired with a second source **635**. Here the ratio of the depths between them is chosen so that source **635** is at the shallow limit of the ghost notch zone between ghost bands 1 and 2 when source **630** is at the deep limit of that ghost notch zone. This is the minimum depth separation that ensures coverage at every frequency over the bandwidth of those sources (**660** in Figure **6**). Note if there are two sources covering a frequency, then the limits on the source depths are less restricted; it is necessary only to ensure that one or the other source covers each frequency adequately. What is restricted is the minimum depth offset (expressed as a depth ratio) between the two sources at the same frequency.

For non-vertical propagation, the source depth is effectively multiplied by the cosine of the angle from the vertical. On a log-log plot like Figure **6**, multiplication by a constant depth scale factor corresponds to a constant vertical shift. The cosine of 60 degrees is one half, so for propagation at 60 degrees from the vertical the source depths effectively halve. This is shown by the dotted lines **611**, **621**, **631**, **636**, **641**, and **646**, corresponding to solid lines **610**, **620**, **630**, **635**, **640**, and **645** respectively, but for propagation at 60 degrees from the vertical. Note the minimum depth ratio **660** that spans the notch zone between ghost bands 1 and 2 remains the same after the shift, i.e., in Figure **6** the vertical separation between **630** and **635** (**660**) is the same as the vertical separation between **631** and **636** (also **660**). This represents a minimum separation; it could also be larger than this.

Sources **630** and **635** hand off to sources **640** and **645** at 43.24 Hz. These sources are spaced in depth (shown by **670** in Figure **6**) so as to just span the notch zone between ghost bands 2 and 3, which is the widest notch zone those sources need to span over their frequency range and for propagation angles between vertical and 60 degrees.

Figure **6** demonstrates a methodology for designing an array of sources spanning a desired range of frequencies, depths, minimum source amplification factors, and propagation angles. There are many possible ways of doing this and those skilled in the art will readily see how the principles can be applied to other array specifications. The key is to note which notch zones must be spanned within the frequency and dip range of each proposed source. The widest of these determines the minimum ratio of depths between sources. The depth ranges of the sources are controlled by the choice of how to allocate them among the ghost bands, and the need to have each of the sources deep enough to avoid cavitation.

Although in this example the sources operate in pairs spanning identical frequency ranges (i.e. **630** and **635**, **640** and **645**) that is not a requirement of the method. The shallower and deeper sources could instead partition frequencies differently.

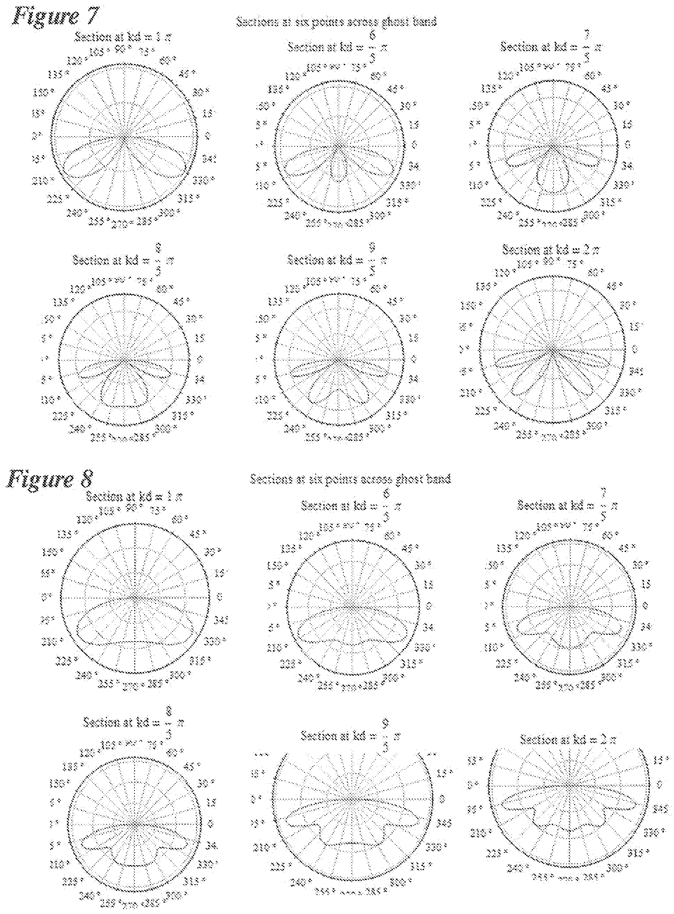

Depending on the required range of dips and frequencies and the types of sources used, it is often also possible to construct a source array that directly generates a desirable radiation pattern in the field. Figure 7 shows polar diagrams for a single source in the second ghost band. The polar diagrams correspond to different values of the $k$-$d$ product across the ghost band (here "$kd$" means the product of wavenumber $k$ and depth $d$, which ranges from $(n-1)\pi$ to $n\pi$ across ghost band $n$). The polar diagram has a null in the vertical direction at the lowest $kd$ ($kd=\pi$), corresponding to the notch between ghost bands 1 and 2. As $kd$ increases, this null divides into two nulls on either side of the vertical. These move away from the vertical with increasing $kd$, ending up at $\pm 60°$ at the highest $kd$ ($kd=2\pi$), when a new null appears at the vertical, corresponding to the notch between ghost bands 2 and 3. In this example the source amplification factor varies between 0 (at a notch) and 2 (for perfect constructive summation).

Figure **8** shows the corresponding figure with a second source at two-thirds the depth of the first and with a phase shift of 90° relative to the first. Thus in this example it is assumed that there are two sources whose phase can be controlled. This combination has a radiation pattern that is free of nulls over the limited frequency band covered by the sources (apart from the horizontal direction, where a null is unavoidable). Here the source amplification factor (relative to a single source) varies between about 1.5 and 2.7. Note in this case the radiation pattern is actually wider-offset than a single source in the first ghost band could produce. Note the second source may also be deeper than the first, instead of shallower as shown here.

Sources 402 and 412 in Figure 4 show the arrangement from Figure 8 for a pair of sources in ghost band 2. Note the depth of the 2nd source (412) at 2/3 the depth of the 1st source (402) shifts the notch zone by exactly half the frequency bandwidth of the source. The source array of Figure 4 can be augmented with a single additional source in this way if it were desired to avoid notches for non-vertical propagation for frequencies up to 36 Hz, but notches at wide offset for higher frequencies can be tolerated (hence there is only one source for those frequencies).

If the relative phases between sources 402 and 403 where they adjoin can be controlled, the bandwidth of 402 across the notch zone could be extended (e.g. 422) to mitigate that notch for a range of near-vertical propagation angles. If the relative phases cannot be controlled, techniques for separating sources that are well known to those of ordinary skill in the art could instead be applied in the frequency overlap zone. This methodology could also be applied at the joins between sources 403 and 404, and 404 and 405, etc., as well. While this would not eliminate notches at wide offsets, it would eliminate notches for near-vertical propagation, which is likely to be the signal of interest for higher-frequency sources.

The preceding examples serve to illustrate methodologies for designing an array of controlled-frequency sources. For each possible source, the following will be useful information:

    i. Maximum amplitude (may be a function of the time interval it is summed over);

    ii. Minimum and maximum usable frequency;

    iii. Minimum and maximum operating depth at each frequency;

    iv. Whether or not the source phase is controllable; and,

    v. Whether or not the source produces harmonics.

For the imaging problem to be solved, the following will be useful information:

    i. Minimum and maximum frequency desired;

    ii. Minimum required notch-free propagation angle (may be a function of frequency);

    iii. Minimum shot spacing required at each frequency. (When combined with tow speed, this determines the shot time interval at that frequency); and,

    iv. Required total amplitude as a function of frequency (summed over that shot spacing).

The desired frequency spectrum is then, according to one example, apportioned into 3 regimes:

    i. Low frequencies where the sources can be placed in the first ghost band, following conventional practice.
    ii. Intermediate frequencies where higher ghost bands are required to avoid cavitation, and energy is required out to wide offsets.
    iii. High frequencies where higher ghost bands are required to avoid cavitation, but only narrow-offset energy is required.

Sources chosen from those available then can be apportioned among the three cases. The sources should be capable of producing the required amplitude summed over the required shot interval, which depends on the required minimum shot spacing at that frequency divided by the tow speed. If the chosen sources produce harmonics then these will also be accounted for.

For the low-frequency regime, only one source will usually be necessary for each frequency. In most cases the sources should be positioned to approximately track the center of the ghost band where the efficiency is optimal. For the high-frequency regime, again only one source will typically be required for each frequency, possibly with some overlap for frequencies near the ghost notch, so that the notch zone is avoided for a range of angles near vertical (instead of just exactly at vertical). In both of these cases careful attention needs to be paid to the ghost-band boundaries.

For the intermediate-frequency regime there should be sources at two different depths for each frequency. The depth ratio will usually need to be sufficient to span the widest ghost notch that lies within the desired offset range for that frequency. If the source phases are controllable, then it may be desirable to produce the desired antenna response directly in the field. Otherwise, source separation techniques may be applied to separate the signals from the sources at two different depths and the desired antenna response, or responses, synthesized during processing in a computer. Note in this regime the source frequency ranges may span ghost-band boundaries, because at each frequency we have sources at two different depths, at most one of which will lie within a ghost-notch zone at each frequency.

Source separation techniques will usually be applied to avoid conflict between sources with adjacent, overlapping, or coincident frequency ranges using techniques proposed in, for example, Dellinger and Abma, 2010, "Distance- and frequency-separated swept-frequency seismic sources", WO 2012/078966 A2, which distinguishes sources by frequency and location.

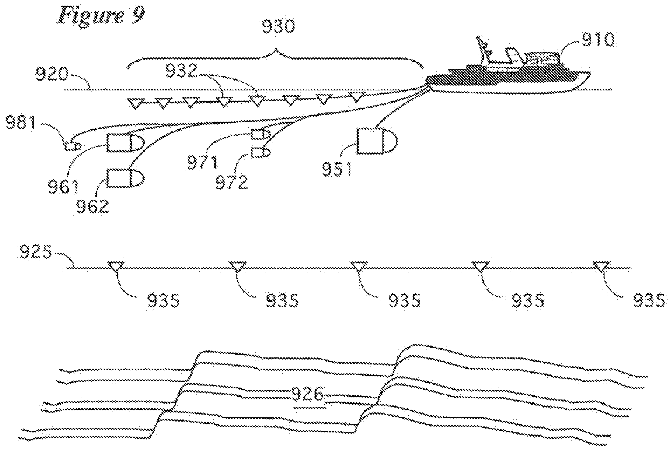

Figure **9** contains an exemplary illustration of how the instant invention might be utilized in practice. In one arrangement a seismic boat **910** will tow one or more seismic streamers **930** over the surface of the ocean **920** above a target of exploration interest in the subsurface **926**. Each streamer **930** will contain a plurality of seismic receivers **932** (i.e., hydrophones) as is conventionally done. Note that, although Figure **9** illustrates the seismic streamers **930** being towed by the same boat that tows the seismic sources (discussed below), in practice, the sources will typically be towed by a separate boat as is conventionally done.

Additional receivers **935** can be provided on the ocean floor **925** or, depending on the nature of the survey, only ocean bottom receivers **935** or towed streamers **930** can be used.

Additionally, and according to an embodiment of the instant invention, at least two different types of sources will be towed by the source boat **910**. Preferably, and has been discussed previously, there will be one or more low frequency sources **951**, in combination with some number of increasingly higher frequency sources **961** and **962**, **971** and **972**, and **981**. For purposes of illustration only, the relative sizes of the sources in Figure **9** have been varied to reflect in a general way their center frequency. This is not intended in any way to be interpreted as a requirement that in practice the sources would be so constrained in a relative or absolute size.

Although sources are shown vertically over each other in Figure 9, the combined radiation pattern may be further modified by offsetting the second source horizontally from the first, which can be used to produce an asymmetric radiation pattern if desired.

In practice, as is known to those skilled in the art, it may be desirable to operate two or more sources together in a synchronized manner, so that they produce identical signals and together function as a single, more powerful source.

By way of further explanation, it is well known to those of ordinary skill in the art that the water surface is essentially a mirror that reflects pressure with a polarity change (i.e., because the pressure at the surface is zero, the up going plus down going waves must sum to zero there and, hence, the up going and down going waves must be equal but opposite there.)

As a consequence, if "d" is the source depth, the instant situation can be conceptualized as a homogeneous medium with an anti-source a distance of "2d" above the actual source. In this case, a notch is created whenever 2d is an integer multiple of the wavelength and a doubling when 2d is a half-integer multiple of the wavelength. The wavelength is the speed of sound in water, about 1500 m/s for example, times the period (i.e., distance = Rate x Time) and the period if *1/F,* where "F" is the frequency in Hz.

Thus, a notch will be created when *k*1500/F = 2d*, where "*k*" is an integer. That is, where *d=k*750/F.* By way of example, for 8 Hz, the first notch is at 94 meters. At 4 Hz, the first notch is at 187 meters.

For constructive summation, the tow depth should be chosen such that *d = (k + 1/2) * 750 / F.* Thus, at 8Hz, the first peak will be at 47 meters, at 4Hz, the peak will be at 94 meters. At 2Hz, there will be a peak at 188 meters, and at 1Hz, a peak will occur at 375 meters.

If it is desired to optimize the amplitudes over an entire sweep range, a depth that placed the constructive summation peak at about ¾ of the maximum sweep frequency would be acceptable. If the peak were to be placed in the middle of the band, the notch would be expected to be at the upper end which would be undesirable. So, in some embodiments it might be desirable to split the difference between one and ½ of the peak frequency. So, for 8Hz that would correspond with a tow depth of about 60 meters.

A problem with low frequencies is getting away from the notch at k=0, i.e., for low enough frequencies the source will need to be placed "too near the surface." To see how the amplitude varies away from the notch at d=0, add the sine waves from the source and anti-source:

$$\sin\left(\frac{2\pi(x+d)F}{1500}\right) - \sin\left(\frac{2\pi(x-d)F}{1500}\right) = 2\cos\left(\frac{F\pi x}{750}\right)\sin\left(\frac{dF\pi}{750}\right)$$

Thus, the variation of amplitude with source depth d is:

$$\sin\left(\frac{dF\pi}{750}\right)$$

Using the small-d approximation, i.e., sin(d) = d, and Pi / 750 is approximately 0.004, thus the amplitude will be approximately equal to:

$$dF * 0.4\% .$$

This should be a good approximation for depths that are shallow compared to the wavelength, i.e., at shallow depths, at 1Hz there is a gain of 0.4% more amplitude for each meter the source is moved away from the free surface. At 2Hz, the gain is 0.8%, at 8Hz the gain is 3.2%, etc.

The math above easily generalizes to non-vertical propagation. In that case, only the component of displacement between the source and the mirror-image anti-source parallel to the direction of propagation matters. This scales the effective depth $d$ of the source by the cosine of the angle between the direction of propagation and the vertical. If the angle is 90 degrees, the cosine of 90 degrees is zero, and thus there is a notch for all frequencies for horizontal propagation. At 60 degrees from vertical the effective depth is halved, because the cosine of 60 degrees is one half.

An important concept that is utilized by the instant invention but which has not been recognized by the prior art is how to use the deeper peaks. Previously, seismic survey designers just used the first (i.e., shallowest) peak for non-impulsive sources. For example, in the prior art it is known to vary the depth of a swept-frequency source to keep it at an optimal depth at the first ghost peak, even as the frequency varies. See, for example, Laws et al., 2007, "Method of seismic surveying, a marine vibrator arrangement, and a method of calculating the depths of seismic sources", US Patent No. 7,257,049. Laws et al. also propose swept-frequency sources at two or more depths, but does not attempt to make use of the fact that different sources may cover different frequency ranges. All the sources sweep over the full frequency range, and as a result they are all relatively shallow (15 meters or less).

The instant inventors have observed that if a limited bandwidth is available (as, practically speaking, it always is for swept-frequency sources), then deeper tows may be possible because a given depth may be within the ghost band for the entire frequency range of a limited-bandwidth source.

While the invention has been described and illustrated herein by reference to certain preferred embodiments in relation to the drawings attached hereto, various changes and further modifications, apart from those shown or suggested herein, may be made therein by those skilled in the art. The invention is determined by the following claims.

## Claims

1. A method of marine seismic exploration or surveillance, comprising:

   selecting a first seismic source (401), said first seismic source (401) comprising a swept frequency source and having a first bandwidth associated therewith;
   selecting a second seismic source (402), said second seismic source (402) comprising a swept frequency source and having a second bandwidth associated therewith, said second bandwidth being adjacent and higher in frequency to said first bandwidth;
   using said first bandwidth to determine a first source depth such that substantially all of said first bandwidth falls between a zero frequency notch (330) and a first ghost notch (320), said first ghost notch being the closer notch at a higher frequency to said zero frequency notch;
   using said second bandwidth to determine a second source depth such that substantially all of said second bandwidth falls between said first ghost notch (320) and a second ghost notch, said second ghost notch being the closer notch at a higher frequency to said first ghost notch (320), thereby creating a two-source survey plan; and,
   collecting at least one seismic trace by activating said first seismic source at said first source depth and said second seismic source (402) at said second source depth according to said survey plan.

2. The method according to claim 1, further comprising:

   selecting one or more further seismic sources (403, 404, 405, 406) each comprising a swept frequency source and each having an associated bandwidth adjacent and higher in frequency to the previously selected source; and

using the bandwidth of each selected source to determine for each selected source a source depth such that substantially all of said selected source bandwidth falls between a ghost notch at the upper limit of the previously selected source bandwidth and the closer ghost notch at a higher frequency, thereby creating a multi-source survey plan.

**3.** A method of marine seismic exploration or surveillance, comprising the steps of:

selecting a minimum source amplification factor, the minimum source amplification factor determining the width of the notch zones around each ghost notch;
selecting a range of required acquisition frequencies;
selecting a range of required offsets / angles for each frequency in that range;
using the method of claims 1-2 to span the range of frequencies.

## Patentansprüche

**1.** Verfahren zur seismischen Meereserkundung oder - überwachung, das Folgendes beinhaltet:

Auswählen einer ersten seismischen Quelle (401), wobei die genannte erste seismische Quelle (401) eine Wobbelfrequenzquelle umfasst und eine damit assoziierte erste Bandbreite hat;
Auswählen einer zweiten seismischen Quelle (402), wobei die genannte zweite seismische Quelle (402) eine Wobbelfrequenzquelle umfasst und eine damit assoziierte zweite Bandbreite hat, wobei die genannte zweite Bandbreite an die erste Bandbreite angrenzt und in der Frequenz höher ist als diese;
Verwenden der genannten ersten Bandbreite, um eine erste Quellentiefe zu bestimmen, so dass im Wesentlichen die gesamte genannte erste Bandbreite zwischen eine Nullfrequenzkerbe (330) und eine erste Geisterkerbe (320) fällt, wobei die genannte erste Geisterkerbe die nähere Kerbe bei einer höheren Frequenz zu der genannten Nullfrequenzkerbe ist;
Verwenden der genannten zweiten Bandbreite, um eine zweite Quellentiefe zu bestimmen, so dass im Wesentlichen die gesamte genannte zweite Bandbreite zwischen die genannte erste Geisterkerbe (320) und eine zweite Geisterkerbe fällt, wobei die genannte zweite Geisterkerbe die nähere Kerbe bei einer höheren Frequenz zu der genannten ersten Geisterkerbe (320) ist, wodurch ein Zwei-Quellen-Vermessungsplan erzeugt wird; und
Sammeln mindestens einer seismischen Spur durch Aktivieren der genannten ersten seismischen Quelle in der genannten ersten Quellentiefe und der genannten zweiten seismischen Quelle (402) in der genannten zweiten Quellentiefe gemäß dem genannten Vermessungsplan.

**2.** Verfahren nach Anspruch 1, das ferner Folgendes beinhaltet:

Auswählen einer oder mehrerer weiterer seismischer Quellen (403, 404, 405, 406), die jeweils eine Wobbelfrequenzquelle umfassen und jeweils eine assoziierte Bandbreite haben, die an die zuvor ausgewählte Quelle angrenzt und in der Frequenz höher ist als diese; und
Verwenden der Bandbreite jeder ausgewählten Quelle, um für jede ausgewählte Quelle eine Quellentiefe zu bestimmen, so dass im Wesentlichen die gesamte genannte ausgewählte Quellenbandbreite zwischen eine Geisterkerbe an der oberen Grenze der zuvor ausgewählten Quellenbandbreite und die nähere Geisterkerbe bei einer höheren Frequenz fällt, wodurch ein Multiquellen-Vermessungsplan erzeugt wird.

**3.** Verfahren zur seismischen Meereserkundung oder - überwachung, das die folgenden Schritte beinhaltet:

Auswählen eines minimalen Quellenverstärkungsfaktors, wobei der minimale Quellenverstärkungsfaktor die Breite der Kerbzonen um jede Geisterkerbe bestimmt;
Auswählen eines Bereichs von erforderlichen Erfassungsfrequenzen;
Auswählen eines Bereichs von erforderlichen Offsets/Winkeln für jede Frequenz in diesem Bereich;
Anwenden des Verfahrens nach den Ansprüchen 1-2, um den Frequenzbereich zu überspannen.

## Revendications

**1.** Procédé d'exploration ou de surveillance sismique marine, comprenant :

la sélection d'une première source sismique (401), ladite première source sismique (401) comprenant une source de fréquence balayée et ayant une première largeur de bande associée ;

la sélection d'une seconde source sismique (402), ladite seconde source sismique (402) comprenant une source de fréquence balayée et ayant une seconde largeur de bande associée, ladite seconde largeur de bande étant adjacente et supérieure en fréquence à ladite première largeur de bande ;

l'utilisation de ladite première largeur de bande pour déterminer une première profondeur de source de telle sorte que sensiblement la totalité de ladite première largeur de bande se situe entre une encoche de fréquence nulle (330) et une première encoche fantôme (320), ladite première encoche fantôme étant l'encoche la plus proche à une fréquence supérieure de ladite encoche de fréquence nulle ;

l'utilisation de ladite seconde largeur de bande pour déterminer une seconde profondeur de source de sorte que sensiblement la totalité de ladite seconde largeur de bande se situe entre ladite première encoche fantôme (320) et une seconde encoche fantôme, ladite seconde encoche fantôme étant l'encoche la plus proche à une fréquence supérieure de ladite première encoche fantôme (320), créant ainsi un plan de levé à deux sources ; et,

la collecte d'au moins une trace sismique par l'activation de ladite première source sismique à ladite première profondeur de source et ladite seconde source sismique (402) à ladite seconde profondeur de source conformément audit plan de levé.

2. Procédé selon la revendication 1, comprenant en outre :

la sélection d'une ou plusieurs autres sources sismiques (403, 404, 405, 406) comprenant chacune une source de fréquence balayée et chacune ayant une largeur de bande associée adjacente et supérieure en fréquence à la source précédemment sélectionnée ; et

l'utilisation de la largeur de bande de chaque source sélectionnée pour déterminer pour chaque source sélectionnée une profondeur de source de sorte que sensiblement la totalité de ladite largeur de bande de source sélectionnée se situe entre une encoche fantôme à la limite supérieure de la largeur de bande de source précédemment sélectionnée et l'encoche fantôme la plus proche à une fréquence supérieure, créant ainsi un plan de levé multi-sources.

3. Procédé d'exploration ou de surveillance sismique marine, comprenant les étapes consistant à :

sélectionner un facteur d'amplification de source minimum, le facteur d'amplification de source minimum déterminant la largeur des zones d'encoche autour de chaque encoche fantôme ;

la sélection d'une gamme de fréquences d'acquisition requises ;

la sélection d'une plage de décalages/angles requis pour chaque fréquence dans cette plage ;

l'utilisation du procédé selon revendications 1 et 2 pour couvrir la gamme de fréquences.

*Figure 1*

DESIGN SEISMIC SURVEY TO IMAGE SUBSURFACE TARGET — 110

CONDUCT SURVEY — 120

* POSITION RECEIVERS ACCORDING TO DESIGN
* POSITION SOURCES TO MINIMIZE GHOST NOTCHES
* RECORD SOURCE ACTIVATIONS WITH RECEIVERS

130 — INITIAL PROCESSING: PRODUCE GEOPHYSICAL DATA WITH X / Y COORDINATES

160 — DIGITIZED ZONE OF INTEREST (ZOI)

150

ALGORITHMS FOR PROCESSING / IMAGING DATA — 140

COMPUTER DISPLAY OF GEOPHYSICAL DATA AND/OR ATTRIBUTES — 170

WORKSTATION

PROCESSING COMPUTER(S) OR WORKSTATION

MAP OR PLOT OF SEISMIC DATA AND/OR ATTRIBUTES — 180

*Figure 2*

210

SEISMIC DATA COLLECTION
ACQUIRE SPATIALLY RELATED UNSTACKED
SEISMIC DATA OVER EXPLORATION TARGET

215

EDIT
- DIGITIZATION
- DEMULTIPLEX
- WAVLET SHAPING
- VIBROSEIS CORRELATION
- VERTICAL SUM, RESAMPLE, ETC.

220

INITIAL PROCESSING
- SPECIFY SURVEY GEOMETRY
- APPLY INITIAL DECONVOLUTION
- DETERMINE/APPLY FIELD STATICS
- ANALYZE AMPLITUDES
- ANALYZE VELOCITIES
- APPLY NORMAL MOVEOUT (NMO)
- SORT (E.G., INTO CMP ORDER)

230

SIGNAL PROCESSING/
CONDITIONING/IMAGING
- DETERMINE/APPLY RESIDUAL STATICS
- REMOVE MULTIPLES
- APPLY DECONVOLUTION (OPTIONAL)
- FREQUENCY FILTERING
- PRESTACK IMAGING
- MUTE AND STACK
- APPLY ADDITIONAL GAIN CORRECTIONS
- POST STACK IMAGING

240

TIME OR DEPTH

Y

X

IMAGED SECTIONS OR VOLUMES

250

INITIAL SEISMIC INTERPRETATION
- PICK MAJOR REFLECTORS, FAULTS, ETC.
- IDENTIFY SURFACE LAND-MARKS (WELLS, ETC.)

260

DATA / IMAGE ENHANCEMENT

270

ATTRIBUTE GENERATION

280

SEISMIC DATA RE-INTERPRETATION

290

PROSPECT GENERATION

Figure 3

Figure 4

EP 2 962 132 B1

### *Figure 5A*

Radiation pattern in centre of ghost band 1

### *Figure 5B*

Radiation pattern in centre of ghost band 2

Radiation pattern in centre of ghost band 3

Radiation pattern in centre of ghost band 4

### *Figure 5C*

### *Figure 5D*

*Figure 6*

*Figure 7*

Sections at six points across ghost band

Section at kd = 1 π

Section at kd = $\frac{6}{5}$ π

Section at kd = $\frac{7}{5}$ π

Section at kd = $\frac{8}{5}$ π

Section at kd = $\frac{9}{5}$ π

Section at kd = 2 π

*Figure 8*

Sections at six points across ghost band

Section at kd = 1 π

Section at kd = $\frac{6}{5}$ π

Section at kd = $\frac{7}{5}$ π

Section at kd = $\frac{8}{5}$ π

Section at kd = $\frac{9}{5}$ π

Section at kd = 2 π

EP 2 962 132 B1

Figure 9

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011017543 A
- US 7257049 B
- US 2012147699 A
- US 20100008184 A
- WO 2012078966 A2
- US 2010008184 A

**Non-patent literature cited in the description**

- **HEGNA ; PARKS.** *Method for acquiring and processing marine seismic data to extract and constructively use the up-going and down-going wave-fields emitted by the source(s),* 2010